**Europäisches Patentamt**

**European Patent Office**

**Office européen des brevets**

(19)

(11) **EP 1 225 785 A1**

(12) **EUROPEAN PATENT APPLICATION**

(43) Date of publication:
**24.07.2002 Bulletin 2002/30**

(51) Int Cl.⁷: **H04Q 11/04**

(21) Application number: **00440288.9**

(22) Date of filing: **27.10.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | • **Kopf, Andreas**<br>**70565 Stuttgart (DE)**<br>• **Seibold, Wolfram**<br>**73630 Remshalden (DE)** |
| (71) Applicant: **ALCATEL**<br>**75008 Paris (FR)** | (74) Representative:<br>**Menzietti, Domenico, Dipl.-Ing et al**<br>**Alcatel**<br>**Intellectual Property Department, Stuttgart**<br>**70430 Stuttgart (DE)** |
| (72) Inventors:<br>• **Wahl, Stefan**<br>**71701 Schwieberdingen (DE)** | |

(54) **Access control unit**

(57)    An access control unit to interface one ATM core network and at least one bidirectional access network is provided, which includes means to perform ATM signalling and resource management to provide dynamically adjustable ATM switched virtual connections (SVC) for subscribers connected to the access network. The central access control unit processes ATM signalling and resource management to enable e.g. switched virtual connection over HFC. During the ATM signalling phase the applications negotiate the required resources which the central access control unit of HFC extracts. The central access control unit has the ability to allow or reject a connection (SVC) setup. As soon as the a new SVC is established the access control unit performs on the ATM layer the installation of the negotiated ATM connection values (VPI (virtual path identifier), VCI (virtual channel identifier), ...) at the different involved HFC network elements.

Fig. 1

EP 1 225 785 A1

**Description**

BACKGROUND OF THE INVENTION

This invention relates to an access control unit.

In common HFC (Hybrid Fibre Coax) networks access of subscribers is performed e.g. using TDMA. One or more time slots of a time frame are assigned to one subscriber. The subscriber is allowed to transmit data in the predefined time slot. There is no adaptation between the communication applications, which the user starts or releases and the allocation or deallocation of resources (time slots,...) in the HFC section where the subscriber is connected to. Applications have different QoS requirements which are also not reflected by the HFC MAC (medium access control) processing. Due to the limited resources in the HFC network the independence between the number and types of running communication applications (each produces individual traffic) and the semi-static assignment of upstream and downstream HFC resources is not optimal. If the subscriber gets a huge amount of HFC resources then the applications experience a good QoS, but if the subscriber has stopped the applications the resources are wasted. In the other case, if the subscriber gets only a small amount of resources the applications suffer. The same arguments apply to FDMA and CDMA.

SUMMARY OF THE INVENTION

The primary object of the present invention is to overcome the disadvantages mentioned above.

One embodiment of the present invention is a layer spanning solution where the source layer is the application layer at the users terminal and the influences can be identified in multiple layer of the HFC section down to the MAC layer. This functionality, required to provide individual QoS properties to applications, was not proposed or implemented so far. Each time the user starts an (communication) application, the data transfer generated by this application occupies resources (bandwidth,..) on the way to the destination application. If an application has special requirements concerning the data transfer quality (QoS), it is a known solution in the ATM world to assign these communication partners a dedicated Switched Virtual Connection (SVC). This SVC provides the communicating applications/users exactly those resources (on the whole transfer way), which the communicating applications have negotiated before starting the communication (SVC setup time). Up to now it was known and applied to transmit data over the HFC section using ATM cells, but it was not possible or foreseen to allow the communicating applications to setup an individual SVC on the HFC section. A central access control unit processes ATM signalling and resource management to enable e.g. switched virtual connection over HFC. During the ATM signalling phase the applications negotiate the required resources which the central access control unit of HFC extracts. The central access control unit has the ability to allow or reject a connection (SVC) setup. As soon as the a new SVC is established the access control unit performs on the ATM layer the installation of the negotiated ATM connection values (VPI (virtual path identifier), VCI (virtual channel identifier), ...) at the different involved HFC network elements. Furthermore, on the encryption layer it determines the corresponding encryption keys and installs these encryption keys at the corresponding network elements. Additionally, the access control unit has to calculate the ATM traffic parameters into the corresponding MAC layer values and installs these values at the corresponding network elements. In case of SVC release the access control unit de-installs the MAC values, encryption keys and the ATM connection parameters (VPI, VCI,..). By the present invention QoS is guaranteed for each ATM connection in the HFC section.

Each subscriber (Access Network Termination, cable modem) having an ATM Forum UNI 3.x interface requests an ATM connection with individual parameters (bandwidth, etc.) on his own - also later UNI releases (4.x or later) are possible. The assignment of the requested resources is performed automatically after authentication. The central access control unit receives the signalling signals including an individual subscriber address or identification, the bandwidth request, service category, etc. and assigns the requested bandwidth out of the limited bandwidth of the ATM core network interface. If the requested bandwidth is not available no bandwidth will be assigned. For each new ATM connection a new Finite State Machine for storing the connection status is created. For each new ATM connection an encryption key and a decryption key is generated. Each new ATM connection is a switched virtual connection, which can be dynamically (on-line) modified, e.g. changing the upstream and downstream reservation of bandwidth from time to time depending on the volume of data to be transmitted or on the service requested.

Using ATM 40 Mbit/s can be offered for each subscriber in the downstream direction and 10 Mbit/s in the upstream direction - within this realisation. All kinds of applications, like e.g. internet, telephony, video conferencing will setup individual ATM connections.

Dynamic SLAs (Service Level Agreements) could be supported within the HFC using the present invention due to the ability to setup, release (or modify with the ATM forum release 4.0) of SVCs with parameters corresponding to the definitions within the SLA.

The inventive access control unit serves to interface one ATM core network and at least one bidirectional access network. It includes means to perform ATM signalling and resource management to provide dynamically adjustable ATM switched virtual connections (SVC) for subscribers connected to the access network. The means are e. g. a processing unit programmed with an adequate computer program. The processing unit is e.g. a DSP, a micro processor, an FPGA. A database serves for intermediate storage. The database is e.g. a RAM.

The present invention has the following advantages:

- one central signalling unit for several HFC networks saves costs, time, etc.
- one central resource management saves costs, time, etc.
- QoS (Quality of Service) guaranteed for each ATM connection
- QoS for each communication application due to the layer spanning technical solution
- support of differentiated services (IETF) applying static or dynamic Service Level Agreements
- compliant to HFC standards like DVB, DAVIC, DOCSIS
- the invention is not limited to HFC, but can be implemented in each bidirectional access network, e.g. point-to-multipoint networks like LMDS, HFR, HFC, wireless ATM; even one central access unit serving different access networks, e.g. one HFC network, one HFR network, etc.

BRIEF DESCRIPTION OF THE DRAWINGS

Fig. 1 is a schematic diagram of a basic architecture of an HFC network.

Fig. 2 is a schematic diagram of a service integration.

Fig. 3 is a schematic diagram of an IP port to ATM VC assignment.

Fig. 4 is a schematic diagram of the ACU software.

Fig. 5 is a schematic diagram of a network database.

Fig. 6 is a logical view of the signaling in the HFC network.

Fig. 7 is a schematic diagram of a sucessful outgoing setup.

Fig. 8 is a schematic diagram of a connection database.

Fig. 9 is a schematic diagram of a resource database.

Fig. 10 shows a high priority UDP data stream (UDP3).

Fig. 11 is a schematic diagram of a DiffServ test scenario.

Fig. 12 shows a logical diagram of the signaling channels and the access control unit.

Fig. 13 shows the main modules of the ACU for UNI signaling.

Fig. 14 shows the initialization of a new UCU.

Fig. 15 shows an object interaction diagram for a successful outgoing call setup.

Fig. 16 shows an object interaction diagram for a successful incoming call setup.

Fig. 17 shows an ANT logon scenario.

Fig. 18 shows an ANT logoff scenario.

Fig. 19 shows a resource reservation.

Fig. 20 shows a handle LIM reply.

Fig. 21 shows a handle ANT reply.

Fig. 22 shows the freeing of the allocated resources.

Fig. 23 shows an handle LIM release reply.

Fig. 24 shows an handle ATN release reply.

Fig. 25 shows an HFC topology structure.

Fig. 26 shows a signaling architecture.

DETAILED DESCRIPTION OF THE PREFERRED EMBODIMENTS

Detailed descriptions of the preferred embodiment are provided herein. It is to be understood, however, that the present invention may be embodied in various forms. Therefore, specific details disclosed herein are not to be interpreted as limiting, but rather as a basis for the claims and as a representative basis for teaching one skilled in the art to employ the present invention in virtually any appropriately detailed system, structure or manner.

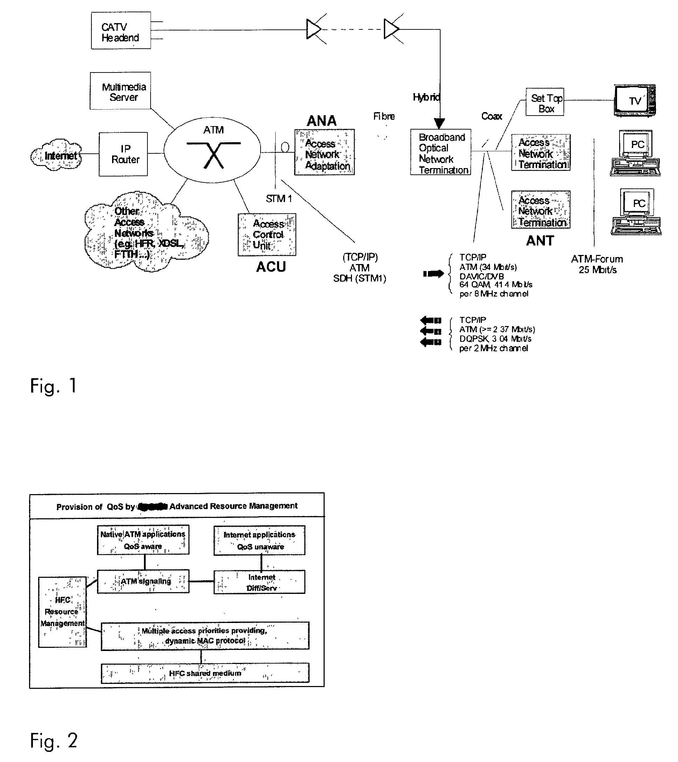

An embodiment of the present invention is described in the following with references to figures 1 to 11.

An Architecture and Experiences of a Multi-Service HFC Network are described including the implementation and validation of an ATM based HFC access network providing Quality of Service for native ATM applications and legacy IP applications. Native ATM applications are supported by Switched Virtual Connections allocating dedicated resources in the HFC network. IP applications are enriched with QoS in the HFC network. The developed and in hardware implemented MAC controller supports several service classes and is capable to distribute not pre-allocated upstream bandwidth in a fair way to the bandwidth requesting cable modems by simultaneous respecting the priorities of the service classes.

A multi-service and Quality of Service providing HFC access network has been designed and implemented. This multi-service access network supports native ATM applications by allowing the setup of Switched Virtual Connections (SVC). Furthermore, the increasing demand of Quality of Service (QoS) for IP based applications is considered by applying the Differentiated Service (DiffServ) concept.

Fig. 1 shows the basic architecture of the ATM-based HFC access network. The relevant access network elements are the Access Network Adaptation (ANA), the Access Network Termination (ANT) and the Access Control Unit (ACU). The ANA is connected via an SDH/STM 1 link to the ATM core network and adapts and routes in downstream direction the ATM based data stream to one of four HFC coaxial cells. Each HFC coaxial cell shares one downstream channel and three upstream channels. The downstream channel uses a DVB compliant framing and modulation and provides an ATM payload capacity of about 34 Mbit/s. The access to the three shared upstream channels is performed using a FTDMA (Frequency and Time Division Multiple Access) principle, hereby, the MAC controller in the ANA defines on a slot by slot basis which ANT is allowed to transmit at what time and on which upstream channel. Each of the three upstream channels has an ATM payload of about 2.4 Mbit/s. The ATM payload is encrypted on the HFC section whereby individual encryption keys can be applied for each ATM connection.

The Broadband Optical Network Termination (BONT) adapts the fiber overlay network to the coaxial segment and combines the CaTV channels with the new ATM channels.

At the subscriber premises, the Access Network Termination (ANT) - also known as a modem or cable modem—provides an ATM Forum 25 Mbits/s interface to the terminal, which is typically a PC. Within the ANT, multiple upstream queues with different serving priorities are implemented to allow service differentiation. Furthermore, a hardware based piggy backing feedback allows an individual and fast upstream bandwidth allocation on a per service class basis. An 8 bit field in the MAC header is employed to encapsulate all priorities request simultaneously piggy-backed on each data cell transmitted upstream, irrespective of which queue has provided the data cell.

The Access Control Unit (ACU) performs the overall HFC access network management. The ACU can be placed remotely and can manage several ANAs resp. HFC coaxial cells. The management tasks comprise the network element initialization, user authorization and the HFC resource management. Extending ATM to the user makes it possible to offer native ATM services with ATM immanent Quality of Service (QoS) guarantee as well as IP-based (IP over ATM) services with IP based QoS.

A platform has been implemented which simultaneously enables QoS for native ATM applications as well as for legacy TCP/IP applications (service integration).

In case of TCP/IP applications the transport of the IP protocol over the ATM based HFC access network is achieved according to "IP over ATM" applying packet encapsulation methods and address resolution protocols but also "LAN Emulation" is supported in the HFC system.

Fig. 2 shows the gross overall protocol stack of the system. There are two distinct vertical branches:

- QoS aware applications, as native ATM applications, use the left branch and set up individual Switched Virtual Connection(s) (SVC) with dedicated traffic and service parameters. They are using the ATM signaling functionality of the HFC system.

- QoS unaware applications, as legacy IP applications, are enriched with QoS in the system due to the application of the differentiated services (DiffServ) strategy. Therefore, the Internet DiffServ module groups the different services into behaviour aggregates (QoS classes) with a similar set of requirements. These service classes have been designed according to the typical occurring flow characteristics and are also attuned to the MAC control functions. In line with the DiffServ philosophy of static Service Level Agreements (SLA), the service classes are mapped on Permanent Virtual Connections (PVC). However, adding the ability to install SVCs within the DiffServ module, also dynamic SLAs can be supported within the HFC system.

To support QoS for IP applications - as soon as the user switches on its ANT and terminal (e.g. PC) - the HFC Resource Management installs all the required PVCs and performs the resource reservation in the HFC system according to the user's SLA. Of course, the setup of these PVCs is only executed if there are sufficient resources available.

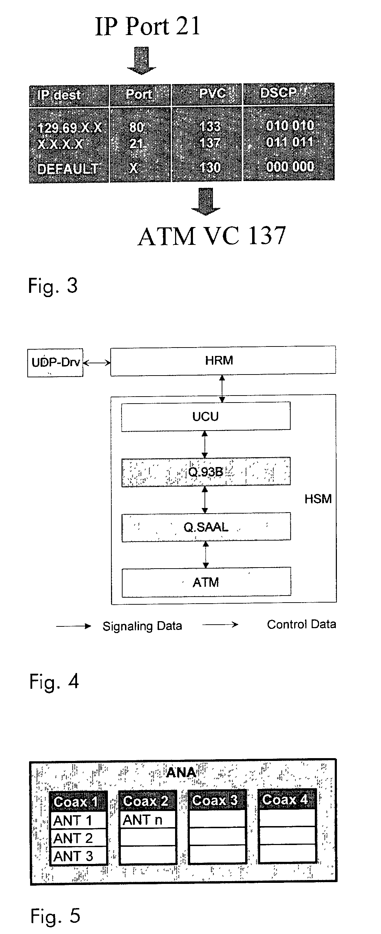

Fig. 3 illustrates the function of the DiffServ module. The DiffServ module acts on the basis of a configurable assignment table. This table determines the upstream PVC to be used for each IP packet. Therefore, the DiffServ module extracts the destination IP address and IP port from each IP packet and uses this information to search in the assignment table for the corresponding PVC. As each PVC is assigned to a specific service class, IP flows experience different QoS. In the given example the entering IP packet has the IP port 21. For this IP port the assignment table does not distinguish between different IP destination addresses (indicated by "X.X.X.X"), so the IP packet will be transmitted on PVC with VCI 137.

The DiffServ module also overwrites the Differentiated Services Code Point (DSCP) bits according to the assignment table to select the traffic class the IP packet experiences in the further nodes.

The system has to allocate a certain amount of resources to support QoS for IP applications, independent whether these resources are actually used. Furthermore, due to the static SLAs the allocated resources for the DiffServ support are also static, which may lead to a degradation of the service quality, if the aggregated IP flows for a specific service class require more resources than configured. DiffServ is not able to refuse a connection requested by a user.

Native ATM applications are QoS aware applications which preset a dedicated Switched Virtual Connections (SVC) with accommodated QoS and traffic parameters. During the connection set up phase the HFC access network allocates the SVC specific resources. At SVC release the allocated resources are freed again. So, native ATM applications allocate only transmission resources during their executing time.

The HFC Resource Management performs the Call Acceptance Control function independent whether a PVC or a SVC is installed. If the HFC Resource Management could verify that the requested resources are available within the HFC access network then the virtual connection setup is proceeded and the resources are allocated. The HFC Resource Management performs a translation of ATM traffic parameters into the MAC specific parameters. So, the dynamic MAC protocol is neither aware of the individual connections nor on their driving IP or ATM applications. The MAC protocol performs dynamic distribution of the unallocated resources on the basis of requests taking into account the different service priorities and distribution fairness.

The goal to support the differentiated services concept in the system incorporates the provisioning of functions in the MAC-layer for the appropriate handling of flow aggregations. The implementation of four aggregation QoS classes in the MAC protocol was identified as a best suited solution to fulfil the following requirements:

- good accommodation of the DiffServ architecture in the HFC system which acts as a distributed multiplexor

- necessity for the MAC protocol must be implementable in hardware for fast reaction time reasons

The four aggregation QoS classes have the following characteristics:

- The highest QoS class is devoted to delay sensitive periodic CBR traffic. This class is suitable for services with very strict delay requirements, which undergo strict traffic profile control (traffic conditioning) such as the EF (Expedited Forwarding) service.

- The second priority level is devoted to real-time variable rate flows, such as video services or VoIP and it is provided with peak rate policing for guaranteed QoS. In the DiffServ context it is used for the top AF (Assured Forwarding) class.

- The third priority is devoted to data services with higher requirements than best-effort. The traffic profile control assumed for this class aims at minimising the loss of packets and the disturbance to other traffic.
  Traffic which exceeds this limit is relegated to the $4^{th}$ QoS class.

- The fourth priority is reserved for plain best-effort services which employ loss based flow control at the TCP level. By using a separate queue, it is assured that this type of traffic has no disruptive influence to the other classes.

The Access Control Unit (ACU) is the central management, control, and signaling control instance for the HFC network elements. The ACU comprises resource management for the network elements (ANAs and ANTs), the control of their transmission resources and signaling proxy tasks. The first two are done by the HFC Resource Manager (HRM), the last one is handled by the HFC Signaling Manager (HSM) (see Fig. 4).

The HRM as the central management instance of the network elements comprises a predefined database containing all network elements, identified by the MAC address, which belong to the responsibility of the HRM.
A log on or a log off of a network element at the system has to be announced to the HRM. The log on procedure of the ANA is being announced to the HRM via management interface, whereas all ANTs register themselves automatically at the HRM after being switched on. This self-registration of the ANTs is achieved by a polling mechanism implemented in the ANA.

For each announced network element the HRM performs an acceptance control and verifies whether the network element belongs to the area of responsibility of the HRM, performed by means of the predefined database mentioned above. The verified and connected network elements are stored in a database as depicted in Fig. 5.

As a result of the registration the HRM gets direct access to the network elements by means of UDP (User Datagram Protocol) via the UDP-Driver. This direct access is encrypted and is used to control the MAC and to configure the routing entries of the network elements. Additionally the UDP connection is used to transmit an encryption key, generated by the HRM for each new connection, to the concerned network elements. The HRM establishes for all active ANTs the required signaling connections and assigns a minimal bandwidth to each ANT.
The HRM supports SNMP because SNMP is the native management protocol to interface additional network equipment, such as IP routers and ATM switches. The HRM offers via the UDP-Drv an interface for an SNMP-to-CORBA (Common Object Request Broker Architecture) gateway and enables access to the connection and resource database of the HRM.

Each active connection in the HFC has an impact on the resource allocation in the network. As a consequence the ACU has to examine all ATM signaling messages to be capable to allocate the required resources after receiving a connect request and to free the resources associated with a connection after it has been released.

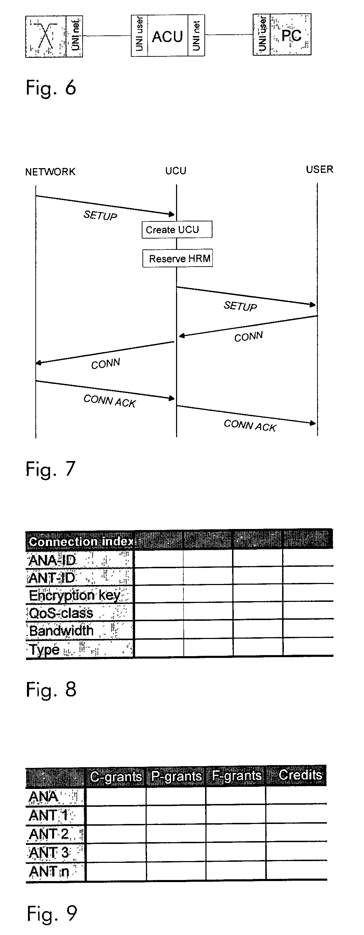

The signaling messages from the end user equipment (PC) are transferred via PVCs over the HFC network and the ATM switch to the HFC Signaling Manager (HSM) on the ACU and vice versa. Therefore, ANA and ANTs are not visible for the HSM. The signaling stack in the ACU provides two types of virtual UNI, one of type UNI network and the other of type UNI user; see Fig. 6.

The ACU has a signaling proxy functionality. Therefore, the signaling flows from the end user equipment and the signaling flows from the ATM switch are both terminated at the ACU. Therefore, two signaling instances are required per end user equipment (PC). Both signaling instances associated with a single ATM connection are controlled by an UNI Control Unit (UCU). The UCU contains a Finite State Machine (FSM) for connection setup and release tracking. This FSM ensures consistency between the signaling on the user and on the network side.

Signaling messages as setup and release which have influence on the allocated HFC resources are forwarded to the HRM. If the available resources are not sufficient while a setup message is received, signaling messages are generated from the ACU on the UNI on which the setup messages was received to reject the connection. Otherwise a new setup message is generated and emitted on the other virtual UNI similar to the received one to proceed with the connection setup (see Fig. 7). For incoming and outgoing connections VPI and VCI are assigned by the virtual UNI running on the switch and they are not relevant for the HSM because the data connection is not routed over the ACU. Releasing a connection is done after a release or invalid signaling message was received, or after SSCOP errors are detected. The HRM is instructed to release the acquired resources after connect release is confirmed or after a timeout.

Using two complete signaling instances with different UNI types per end user equipment instead of a filter based solution provides a maximum of flexibility and signaling control. This is required for an appropriate resource management and correct ATM signaling.

The implementation of the UNI signaling is based on a very generic signaling stack provided by the Trillium Digital Systems, Inc. The Trillium stack is capable to handle different UNI types (network/user) and arbitrary configurations eg. in respect to VPI/VCI assignment. The Trillium Advanced Portability Architecture (TAPA) fits perfectly in the ACU software architecture.

The control of the transmission resources is subdivided into three parts: number of network elements, number of connections and used bandwidth. The HRM monitors the number of active network elements and observes that the maximum number of ANAs per ACU or the maximum number of ANTs per ANA is not exceeded. This is done for each new switched on network element and results in a registration of the network element. Furthermore, the HRM monitors the number of connections per user and observes that the maximum number of connections is not exceeded. A connection setup request which would result in exceeding the maximum allowable number of connections is immediately rejected. The relevant parameters of the established connections as the MAC addresses of the involved network elements, VPI/VCI, bandwidth requirements, and encryption key are stored in the connection database as shown in Fig. 8. The Type field indicates whether the connection is a SVC (switched virtual connection) or a PVC (permanent virtual connection).

Besides the control of the number of network elements and the number of connections, control of the bandwidth resources is required to guarantee Quality of Service. In downstream direction this is done by the edge switch of the ATM core network. For the upstream direction it is up to the HRM to control the available resources.

The resource control mechanism for SVCs is based on the information the HRM is receiving from the HSM. For connection setups this information includes the requested bandwidth (upstream/downstream), the type of traffic (CBR, VBR,...), and the quality of service class. The management of the upstream bandwidth resources is done on the basis of the transmission permits as introduced in. To fulfil the requirements of different traffic types and service classes different kind of transmission permits, further denoted as grants, are introduced. The C-grants are introduced to serve the highest priority connections at a Constant Bit Rate (CBR), whilst the F-grants, which guarantee the fixed part of a Variable Bit Rate (VBR) connection, together with the credits guarantee service up to the peak-rate of a VBR connection. P-grants are assigned to ANTs with no assigned fix-grants, e.g. C-grants, or F-grants, to guarantee a minimum bandwidth for OAM and to enable the ANT to send requests for bandwidth demands.

Bandwidth allocation is done on a per terminal basis, therefore, the bandwidth reserved for a terminal is calculated by summarizing the requirements of the individual connections stored in the connection database (see Fig. 8). High QoS requirements will result in a fixed allocated bandwidth achieved by C-grants and F-grants. Assigned C-grants and F-grants are fix assigned for an ANT while credits - if not completely consumed by the requesting VBR connection - are available for all other terminals. For Unspecified Bit Rate (UBR) connections, bandwidth is allocated on demand as it is derived from the queue length in the ATM layer, but the receiving of bandwidth is not guaranteed and is not taken into account by the HRM for the calculation of transmission resources.

The grants stored in the resource database (shown in Fig. 9) are used to control the MAC protocol to guarantee the requested service quality and fairness.

The ANA row stores the accumulated number of grants.

This results in a layer spanning QoS support architecture as required by QoS aware shared media last mile networks. The signaling layer, the ATM layer, and the MAC layer are working together to provide quality of service.

The MAC protocol implementation distinguishes four QoS classes (as described above) featuring separate priorities and separate logical queues in the ANT. Within the ANT the ATM cells are routed into one of these upstream queues according to the ATM connection identifier. The queue arrival information is collected and with each upstream slot simultaneously sent to the MAC controller in the ANA. These piggy-backed requests do not contain the arrival information of the Constant Bitrate (CBR), queue - first class, which is reserved for delay sensitive constant bitrate services, because this type of traffic uses pre-allocated resources.

The three other service classes apply a reservation method allowing a dynamic allocation of bandwidth to adapt the fluctuating rates. The second service class dedicated for Variable Bitrate (VBR) traffic employs a credit mechanism for the allocation and checking of bandwidth distribution-taking care of the upper limits. The better-than best-effort class (3rd service class) is used to give precedence to the guaranteed portion of the bandwidth. Thus it can protect peer and lower layer services against misbehaving sources in the first two priority classes and to ascertain a minimum for the 3rd class. The 4th priority class represents the best effort service. This service class can use all the remaining upstream bandwidth. Furthermore, the MAC controller assigns the unallocated bandwidth in a fair way between the requesting ANTs by simultaneously respecting the different service classes.

The MAC protocol processing is implemented in hardware to achieve a very fast and constant reaction time from receiving piggy-backed feedback to the generation of transmission permits. Only changes of the ATM connections is done in software which perform modifications of parameters in the MAC control tables.

Successful interworking with other access technologies has been demonstrated by interconnecting the HFC network with ADSL, SDSL and HFR systems. Native ATM and IP-based applications are used to demonstrate the network, HFC resource allocation, and the ATM based signaling of SVCs. Bandwidth consuming and real time critical applications as video conferences, Voice over IP, and application sharing have been demonstrated using the heterogeneous lab network.

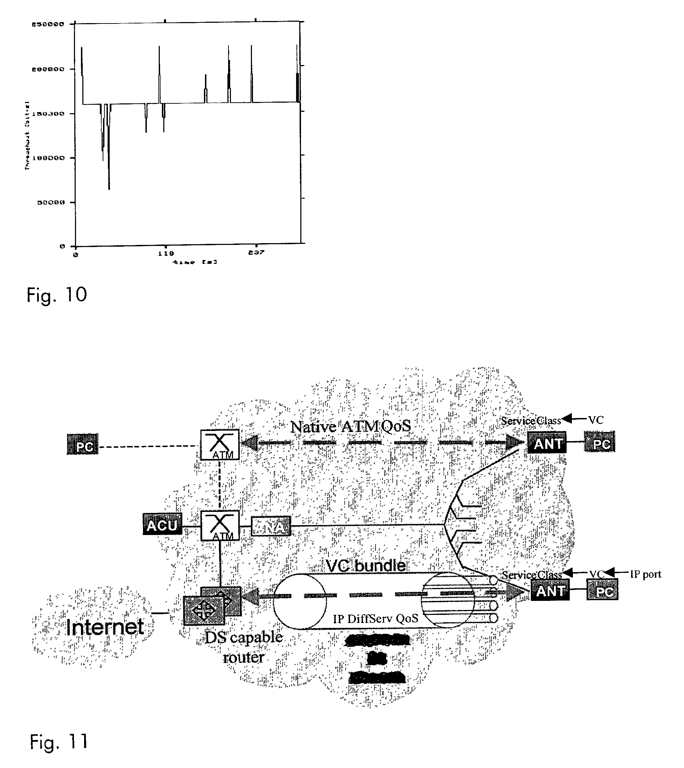

The QoS support for IP applications by using DiffServ is demonstrated in a configuration as shown in Fig. 11.

A DiffServ enhanced PC generates various IP traffic which is classified in its DiffServ driver. The IP packets are transported according to their classification over one of the four different PVCs over the HFC network to a DiffServ capable router. After reclassification they are forwarded to the global internet.

In the following a DiffServ test has been selected to show the interference between the different service classes in case of IP applications. The test should verify that an application using the 1st priority class remains undisturbed by the other bandwidth requesting - 4th priority class-applications even in system overload condition.

Therefore, a test PC executes 4 different IP applications. These applications use only two service classes (1st and 4th), compare Table 1. Three of them are UDP applications whereby one of them experience the 1st priority class. The remaining two UDP applications and the TCP application are using the 4th priority class. The HFC system is loaded with other ANTs, so that only 517 kbit/s is left for the test PC. 200 kbit/s of them are fixed allocated for the 1st priority class. The remaining 317 kbit/s can be free assigned.

Table 1

| Test parameter | | | | |
|---|---|---|---|---|
| IP | ATM | | HFC MAC | |
| IP-Appl. | VC | Mapped to priority class | Fixed bandwidth for 1st priority class Kbit/s | Remaining system bandwidth Kbit/s |
| TCP | 133 | 4 | 200 | 317 |
| $UDP_1$ | 133 | 4 | | |
| $UDP_2$ | 133 | 4 | | |
| $UDP_3$ | 130 | 1 | | |

The test starts with three active applications. Two UDP sources (3 and 1) are sending real audio streams to queue 1 and 4 as described in Table 1 and the TCP source performs a file transfer protocol and uses also the 4th priority class. The total available capacity is shared among the three sources as follows:

The two UDP sources are sending at about 180 kbit/s with a constant data rate and the rest of the available resources are taken by the TCP connection. After 30 seconds the $UDP_2$ source is started. This source sends packets at a constant bitrate of about 160 kbit/s. At this point the system is overloaded (520 kbit/s) with the offered traffic of the three UDP sources. The TCP data stream is forced to reduce its sending rate. During this time the real-time stream from $UDP_1$ (mapped to 4 priority class) experiences significant packet losses, whereas the $UDP_3$ stream (mapped to the 1st priority class) is not suffering which can be seen in Fig. 10. The throughput of the UDP3 source remains constant over the time. When the TCP connection reduces its traffic output to almost 0, the real-time UDP stream can recover. This test shows also how a TCP connection and a UDP connection behave in competition with each other.

The developed HFC access network has built in Quality of Service for native ATM and legacy IP applications. In case of IP applications access differentiation is implemented by incorporating the Differentiated Service architecture.

The layer spanning resource management processes the HFC relevant ATM signaling messages and controles the acceptance of new ATM connections. Additionally, it installs the ATM connections in the HFC network elements and adapts the traffic parameter within the MAC controller.

The hardware based implementation of a piggy-backed feedback in the MAC protocol enables all non CBR services for a fast and dynamic resource allocation to adapt the fluctuating rates. Nevertheless, this dynamic resource allocation method respects the different services classes and fairness.

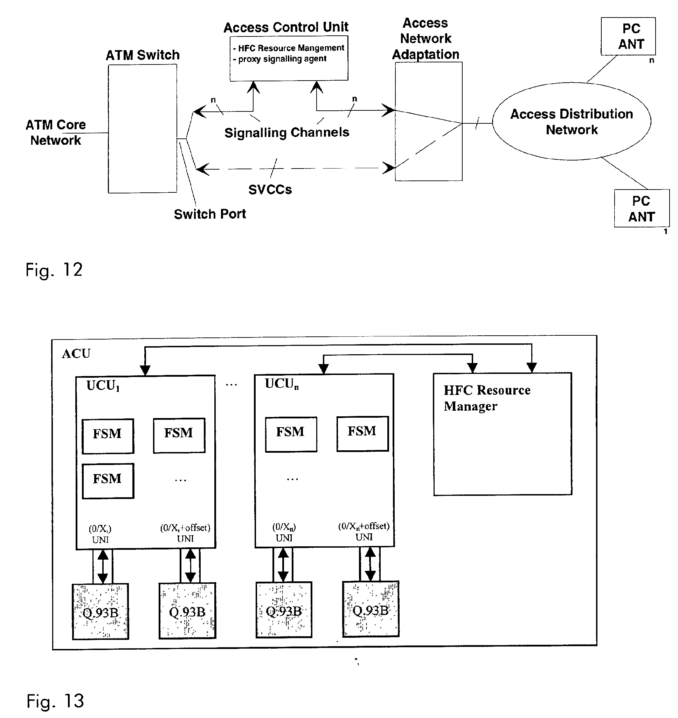

A more detailed embodiment of the present invention is described in the following with references to figure 12 to 26.

In the ATM based HFC access network, multiple end user ATM terminals (PCs) are connected via a common physical media to an ATM switch. Each PC must be able to establish switched connections to a server or another PC. As all PCs are sharing a single ATM Switch port, there must be a way to distinguish the signaling flows of each PC.

Virtual UNI is supporting multiple signaling channels (implies multiple users) on a single UNI. This is done by assigning each end user (PC, ANT) one (or more) VPC(s). Within the user individual VPC, signaling messages are transferred on a dedicated signaling channel (VCI=5). The ATM switch identifies the signaling messages from different users looking at the different VPCs.

Setup and release of VCCs have influence on the occupied allocation of HFC resources. The ACU is responsible for managing the HFC resources. As a consequence the ACU has to view all signaling messages to be able to take appropriate HFC activities. Therefore, all signaling channels are transferred from the end users via the ACU to the ATM switch. The ACU proxy signaling agent receives all signaling messages and behaves towards the ATM switch as user side UNI and towards the PCs as network side UNI. Furthermore, the proxy signaling agent stores for each connection the connection status in a finite state machine (FSM). In case of signaling messages, which change the occupied HFC resources, the HFC resource manager is asked for accepting or simply for information. In case of SETUP (unicast) or ADD PARTY (multicast) messages the HFC resource manager has to decide whether the required resources are available.

If the resources are available, then the proxy signaling agent forwards the signaling messages. Additionally, the HFC resource manager allocates the corresponding resources within the network elements and stores the connection relevant information in its data base. Furthermore, the HFC resource manager generates an En/Decryption key for this connection which is loaded into the cipher function of the ANA and ANT.

If one resource is not available, then the proxy signaling agent does not forward this signaling message but replies with a RELEASE COMPLETE or ADD PARTY REJECT message.

In case of RELEASE or DROP PARTY message the proxy signaling agent forwards this message and only informs the HFC resource manager about the new status of the connection. If the connection is completely released then the HFC resource manager frees the allocated resources within the network elements. The connection data base within the HFC resource manager is updated.

Above the signaling stack shown in Fig. 13 two main modules are required to support the ATM signaling on the HFC. These modules are:

- UNI Control Units and

- HFC Resource Manager.

From a logical point of view each UCU is dedicated to a Virtual UNI (and thus to an endpoint), it is sending/receiving signaling messages to/from the corresponding Network ($0/X_i$+offset) and User ($0/X_i$) signaling VCs, through the Q.93B Upper Layer interface primitives.

Each UCU works with two Q.93B instances (logical view), one for the User Side (signaling VC ($0/X_i$)) and another for the Network Side (signaling VC ($0/X_i$+offset)). In order to work as a signaling proxy, the User Side of the ACU behaves like an ATM switch and the Network Side behaves like an ATM terminal.

Each time a connection request notification is received on a UNI instance (Q.93B AmUiAmtConInd primitive), the UCU creates a new Finite State Machine (FSM) to deal with the new connection. This FSM is terminated after connection release request is received (Q.93B AmUiAmtRelInd primitive) on either UNI instance.
The UCU keeps the following set of information structures:

- FSM list: This list is indexed by Call Reference Value, allowing the easy identification of the FSM to which a signaling message must be passed.
- ANA info: It includes information about the ANA that owns this Virtual UNI, namely its identification.
- ANT info: It includes information about the ANT that owns this Virtual UNI, namely its identification.

The HRM Manager comprises the interface to the lower layers, the UCUs and to the network elements. It also controls the internal data flow between the different modules of the HRM. Resource management is done within the HRM. Due to set-up and release of connections the occupation of resources within the HFC area has to be adapted. Therefore the HRM offers an interface to provide the network elements, the ANA and the ANTs, with the essential information. The HRM uses the SNMP (and/or the test drive) to modify the resources within these elements.

The initialization of a new UNI control unit (UCU) is shown in 14. The Access Network Adaptation (ANA) is observing new Access Network Terminations (ANTs) and has to inform the HRM about the new ANT and it's address by an UDP message. The HRM is sending a message to the UCU to initiate the creation of two new signaling connections (network and user side).

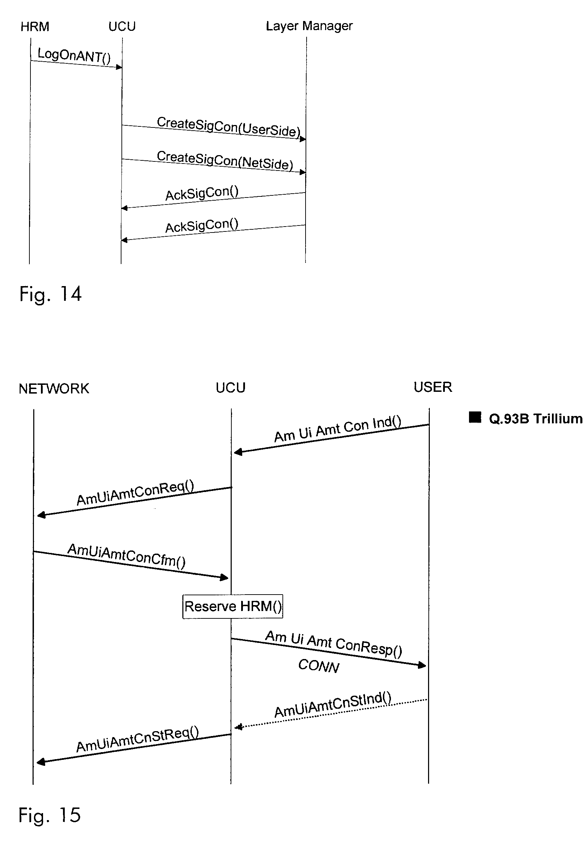

The UCU gets from the Q.93B instance the Trillium primitives AmUiAmtConInd (Connection Indication), AmUiAmtConCfm (Connection Confirm), AmUiAmtCnStInd (Connection Status Indication), AmUiAmtRelInd (Release Indication) and AmUiAmtConResp (Connection Response) to track the status of the connection setup. Figure 15 contains an object interaction diagram for a successful outgoing call setup (HFC user to network) with the Trillium and with the UNI 3.1 primitives as seen by the UCU. The resource reservation in the HFC via ReserveHRM is done after reserving the other network resources because a valid VPI/VCI combination is required for this reservation. The last connection acknowledge from the user side is optional so the UCU must handle both cases.

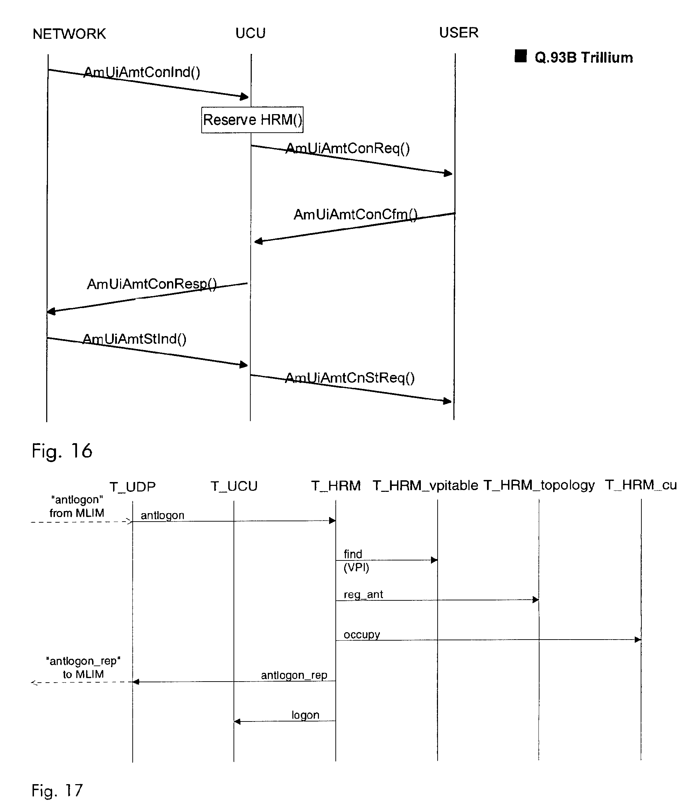

The HFC resource reservation for an incoming call (network to HFC user) is done before the connection request is sent to the user (Figure 16). This guarantees an early cancellation if there are not enough resources available on the HFC network.

The HRM software is event driven. The HRM reacts on events either coming from the UCU, or from the external network devices via the UDP driver. The incoming events trigger the software and starts the corresponding action. The following scenarios show how the different modules interact.

When an ANT is switched on a signalling channel has to be established. The LIM, the ANT is connected to, realises the new ANT and notifies the HRM by sending an ANT logon message (antlogon). This message is received by the UDP driver task which forwards this message to the HRM (see figure 17). Before the new ANT is registered in the topology structure the HRM has to find out the VPI of the ANT. Therefore the HRM maintains a table that contains a VPI for each ANT. These VPIs are unique within each LIM sector. The resource management is under the responsibility of the HRM control unit. If the resource occupation succeeded an ANT logon reply message (antlogon_rep) is sent back to the LIM. The UCU gets the invitation to build up its stack by the "logon" message.

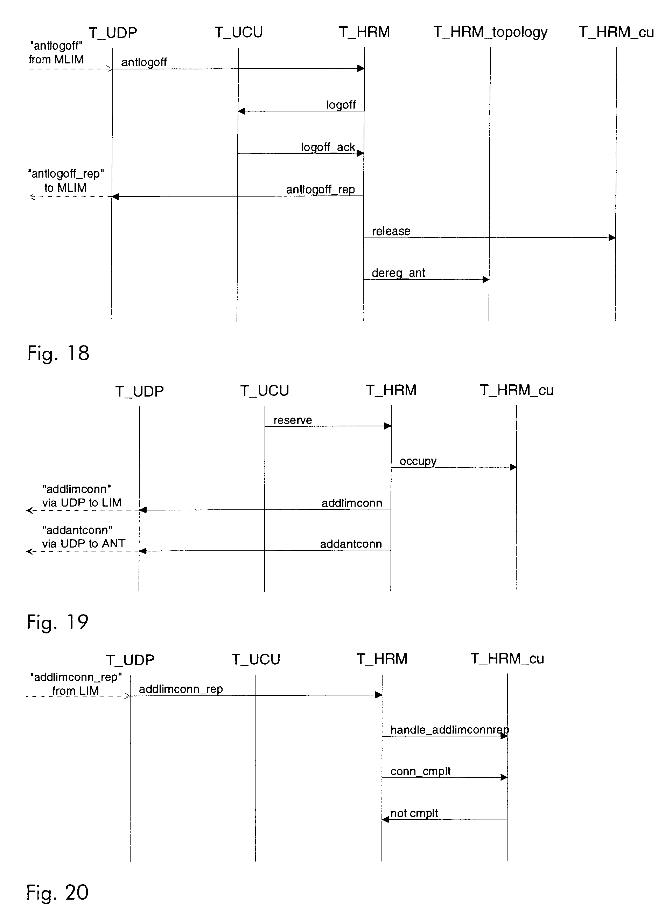

In case an ANT logoff message (antlogoff) reaches the HRM the signalling channel and all remaining connections have to be abolished. The ANT logoff scenario is shown in figure 18. First the UCU has to be informed about the de-installation of the signalling channel. The UCU confirms this by an logoff_ack messages. Thereafter the corresponding LIM gets the reply (antlogoff_rep), the allocated resources are released again, and the entry in the topology structure is removed (dereg_ant).

To establish a new connection the HRM has to perform a resource reservation and furthermore a remote configuration of the routing entries at the involved ANT and LIM in case the required resources are available. Before the HRM can confirm the reservation to the UCU, the responses from both involved network elements, the LIM and the ANT, have to be received. The complete scenario is shown in the figures below.

On every incoming connection set-up request the UCU reacts with a reserve request to the HRM (see figure 19). The HRM verifies to which HFC sector the request belongs and instruct the responsible HFC control unit to occupy the required resources. For the new connection the routing entries within the LIM and ANT have to be configured. The information for the routing entries are delivered by means of the UDP in the generic messages, addlimconn and addantconn.

The ANT and the LIM send a reply to the invitation to establish the new connection. The HRM handles the reply and proofs if both replies have arrived. If both replies have arrived, a reserve acknowledge is given to the UCU, otherwise the HRM has to wait for the missing reply

In figure 20 the reply on the addlimconn-message has arrived from the LIM. The HRM handles the reply message and proofs if the reply message from the ANT has arrived before (conn_cmplt) which is not the case in this scenario. The HRM has to wait for the second reply and no reserve acknowledge can be given up to now.

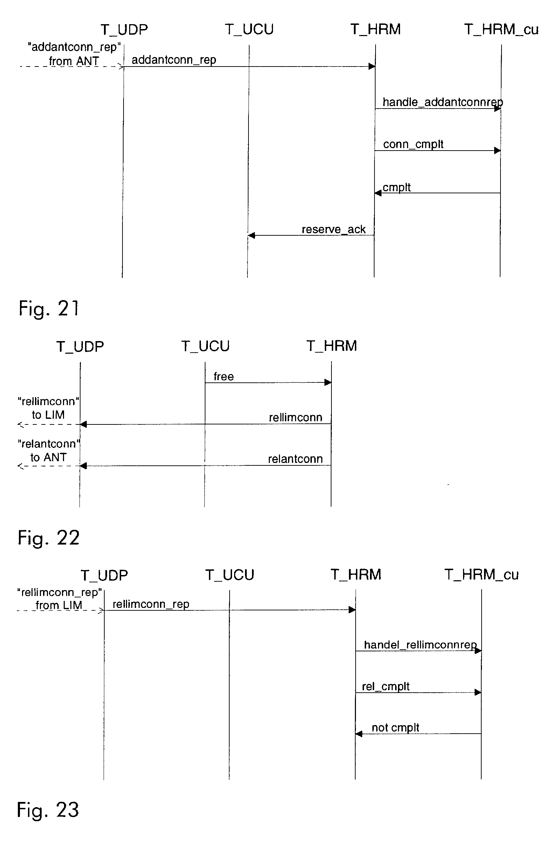

In figure 21 the reply on the addantconn-message has arrived from the ANT. The HRM handles the reply message and proofs if the reply message from the LIM has arrived before which is true now. The HRM is therefore able to give the reserve acknowledge to the UCU.

The HRM gets the invitation to free the allocated resources for a certain connection by receiving the free request from the UCU. The free procedure implicit the removing of the routing entries in the LIM and the ANT. Therefor the HRM delivers the generic messages rellimconn and relantconn to these remote network elements, as depicted in figure 22, to remove the connection from their routing tables.

Before the HRM can complete the freeing procedure the responses on the release requests from the LIM and the ANT have to be received as it is the case for the reserve procedure.

In figure 23 the reply on the rellimconn-message has arrived from the LIM. The HRM handles the reply message and proofs if the reply message from the ANT has arrived before (conn_cmplt) which is not the case in this scenario. The HRM has to wait for the second reply and no resources can be released up to now.

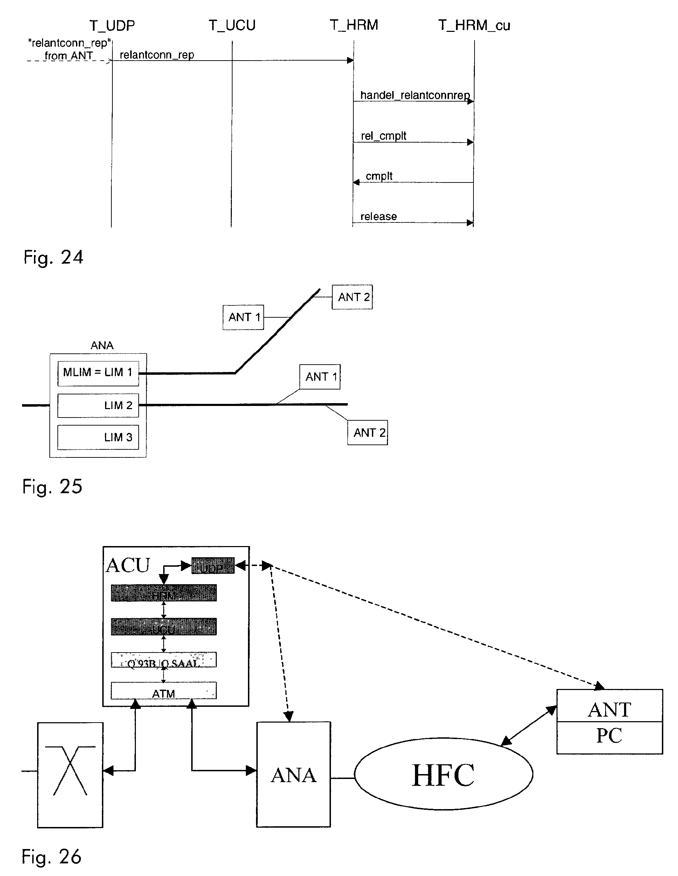

In figure 24 the reply on the relantconn-message has arrived from the ANT. The HRM handles the reply message and proofs if the reply message from the LIM has arrived before which is true now. The HRM is therefore able to release the reserved resources. An acknowledge to the UCU must not been given like it is done in the case of resource reservation because freeing of resources is always possible.

At the end of the resource release procedure no acknowledge has to given to the UCU like it is done in the case of resource reservation as freeing of resources is always possible.

The topological structure of the HFC network as it is shown in Figure 25 can be easily mapped into a table (see Table 2). To identify the devices the hardware address is taken. Each MLIM can control up to four LIMs and each LIM can maintain up to 31 ANTs. Whenever a device, LIM or ANT, is logged on its hardware address is entered in the table concerning its connection scheme.

| MLIM | LIM | ANT |
|---|---|---|
| 5e:1a:1c:03:00:01 | LIM 1. 5e:1a:1c:03:00:01 | ANT 1: 5e:1a:1c:42:00:01 |
| | | ANT 2: 5e:1a:1c:42:00:02 |
| | LIM 2: 5e:1a:1c:03:00:02 | ANT 1: 5e:1a:1c:42:00:03 |
| | | ANT 2: 5e:1a:1c:42:00:04 |
| | LIM 3: 5e:1a:1c:03:00:03 | |

Table 2: HFC topology table

All connection relevant parameters like connection identifier, hardware address of the involved devices, bandwidth requirement, and status are kept in a table subscripted by a connection identifier. This enables a quick and easy access to connection data within the HRM. The connection table is an object within the HRM connection control unit (T_HRM_ccu) which itself is part of a HRM control unit. This means the table contains the data of all connections within one HFC sector.

Table 3 contains the connection relevant parameters with a short description.

| Parameter | Description |
|---|---|
| ZG_limcnidUP; | LIM connection identifier upstream |
| ZG_limcnidDWN; | LIM connection identifier downstream |
| ZG_mlim; | MLIM hardware address |
| ZG_lim; | LIM hardware address |
| ZG_ant; | ANT hardware address |
| ZG_antid; | ANT identifier towards UCU |
| ZG_fvpi; | VPI fibre side |
| ZG_fvci; | VCI fibre side |
| ZG_cvpi; | VPI coax side |
| ZG_cvci; | VCI coax side |
| ZG_key; | Encryption Key (upper/lower) |
| ZG_tea; | Transmit Enable Address |
| ZG_allgrants; | Set of all grants (C, PF, PE, F, and credit grants) |
| ZG_alloc; | Allocation status |
| ZG_vc_type; | Connection Status (SVC or PVC) |
| ZG_limrsp; | Flag, indicates whether LIM response on an add connection message has arrived or not |
| ZG_antrsp; | Flag, indicates whether ANT response on an add connection message has arrived or not |
| ZG_limrsp_rel; | Flag, indicates whether LIM response on a release connection message has arrived or not |
| ZG_antrsp_rel; | Flag, indicates whether ANT response on a release connection message has arrived or not |

Table 3: Connection parameters

A major task of the HRM is to control the bandwidth resources within the HFC network. The HRM resource control unit is responsible for the bandwidth reservation within a HFC sector and has to control the upstream resources of the

EP 1 225 785 A1

ANTs as well as of the LIMs.

The HRM resource control unit keeps the resource table where LIMs and ANTs represented by the hardware address are listed. In the table the accepted grants are add up separate for the different services. The maximum available number of upstream grants per ANT is 509, for each LIM the maximum available number of upstream grants is 1533 because of the three upstream channels. In the resource table the sum of the grants of the different services must not be over the maximum of 509 grants in case of an ANT or over 1533 grants in case of a LIM. Table 4 shows a possible situation.

| | hardware address | C-grants | PF-grants | PE-grants | F-grants | credit-grants | Sum |
|---|---|---|---|---|---|---|---|
| LIM 1 | 5e:1a:1c:03:00:01 | 450 | 2 | 0 | 250 | 250 | 952 |
| ANT 1 | 5e:1a:1c:42:00:01 | 250 | 1 | 0 | 100 | 100 | 451 |
| ANT 2 | 5e:1a:1c:42:00:02 | 200 | 1 | 0 | 150 | 150 | 501 |
| LIM 2 | 5e:1a:1c:03:00:02 | 0 | 2 | 4 | 0 | 0 | 6 |
| ANT 1 | 5e:1a:1c:42:00:03 | 0 | 1 | 2 | 0 | 0 | 3 |
| ANT 2 | 5e:1a:1c:42:00:04 | 0 | 1 | 2 | 0 | 0 | 3 |
| LIM 3 | 5e:1a:1c:03:00:03 | 0 | 0 | 0 | 0 | 0 | 0 |

Table 4: Resource table

Figure 26 shows a signaling architecture.

The UNI Control Unit (UCU) gets from the Q.93B instance the primitives AmUiAmtConInd (Connection Indication), AmUiAmtConCfm (Connection Confirm), AmUiAmtCnStInd (Connection Status Indication), AmUiAmtRelInd (Release Indication) and AmUiAmtConResp (Connection Response) to track the status of the connection setup. The resource reservation in the HFC via ReserveHRM is done after reserving the other network resources because a valid VPI/VCI combination is required for this reservation. The last connection acknowledge from the user side is optional so the UCU must handle both cases.

The HFC resource reservation for an incoming call (network to HFC user) is done before the connection request is sent to the user. This guarantees an early cancellation if there are not enough resources available on the HFC network.

The HRM software is event driven. The HRM reacts on events either coming from the UCU, or from the external network devices via the UDP driver. The incoming events trigger the software and starts the corresponding action. The following scenarios show how the different modules interact.

To establish a new connection the HRM has to perform a resource reservation and furthermore a remote configuration of the routing entries at the involved ANT and LIM in case the required resources are available.

Before the HRM can confirm the reservation to the UCU, the responses from both involved network elements, the LIM and the ANT, have to be received. The complete scenario is shown in the figures below.

13

On every incoming connection set-up request the UCU reacts with a reserve request to the HRM. The HRM verifies to which HFC sector the request belongs and instruct the responsible HFC control unit to occupy the required resources. For the new connection the routing entries within the LIM and ANT have to be configured. The information for the routing entries are delivered by means of the UDP in the generic messages, addlimconn and addantconn.

The ANT and the LIM send a reply to the invitation to establish the new connection. The HRM handles the reply and checks if both replies have arrived. If both replies have arrived, a reserve acknowledge is given to the UCU, otherwise the HRM has to wait for the missing reply

In one example, the reply on the addlimconn-message has arrived from the ANA. The HRM handles the reply message and checks (conn_cmplt) if the reply message from the ANT has arrived, yet. In this scenario it is not the case (not complt). The HRM has to wait for the second reply and no reserve acknowledge can be given up to now.

The reply on the addantconn-message has arrived from the ANT. The HRM handles the reply message and checks if the reply message from the ANA has arrived which is true now. The HRM is therefore able to give the reserve acknowledge to the UCU.

The HRM gets the invitation to free the allocated resources for a certain connection by receiving the free request from the UCU. The free procedure implicit the removing of the routing entries in the LIM and the ANT. Therefore, the HRM delivers the generic messages rellimconn and relantconn to these remote network elements to remove the connection from their routing tables.

Before the HRM can complete the freeing procedure the responses on the release requests from the LIM and the ANT have to be received as it is the case for the reserve procedure.

The reply on the rellimconn-message has arrived from the LIM. The HRM handles the reply message and checks (conn_cmplt) if the reply message from the ANT has arrived, yet. In this scenario it is not the case. The HRM has to wait for the second reply and no resources can be released up to now.

The reply on the relantconn-message has arrived from the ANT. The HRM handles the reply message and proofs if the reply message from the LIM has arrived before which is true now. The HRM is therefore able to release the reserved resources. An acknowledge to the UCU must not been given like it is done in the case of resource reservation because freeing of resources is always possible.

At the end of the resource release procedure no acknowledge has to given to the UCU like it is done in the case of resource reservation as freeing of resources is always possible.

The following algorithms will initially be implemented for CAC which are based on peak rate allocation for VBR traffic. There is no ambition to achieve any multiplexing gain among VBR sources and the system efficiency relies on the full loading obtained by means of filling any surplus bandwidth with best effort traffic. The success and importance of Internet traffic makes such a strategy quite satisfactory. This does not preclude more complex CAC policies for VBR traffic by software modifications.

So according to this philosophy, the available upstream capacity is allocated linearly to CBR, and rt-VBR, according to their peak rate, i.e. if:

(system capacity)-sum of (PCR of CBR and PCR of VBR)>0 i.e.:

$$C_{tot} - \left( \sum_{i}^{m} PCR_{CBR_i} + \sum_{j}^{n} PCR_{VBRj} \right) \geq 0$$

If by adding a new connection this relationship is not satisfied anymore, the connection is released.

If GFR and/or ABR traffic are also supported, their minimum guaranteed rate is also included in the calculation of the available bandwidth, i.e.:

(system capacity)-sum of (PCR of CBR + PCR of VBR +min of GFR/ABR)>0 i.e.:

$$C_{tot} - \left( \sum_{i}^{m} PCR_{CBR_i} + \sum_{j}^{n} PCR_{VBR_j} + \sum_{k}^{l} MCR_{ABR_k} \right) \geq 0$$

The implication is that when the peak rates plus the minimum of ABR exceed the capacity, any new connection requests will be released.

Best-effort traffic can access at any time (the ATM connection devoted to data for each customer is semi-permanent and established at subscription time) but due to its low priority the service quality it will experience will vary according to the system loading conditions. Thus, the bandwidth available to TCP, and to the non-guaranteed part of ABR and GFR can be found from:
(system capacity)-(sum of CBR and SCR of VBR) i.e.:

$$C_{av} = C_{tot} - \left( \sum_{i}^{m} PCR_{CBR_i} + \sum_{j}^{n} SCR_{VBR_j} + \sum_{k}^{l} MCR_{ABR_k} \right)$$

In other words, UBR or TCP/IP traffic use the statistically available left-over bandwidth due to the fact that VBR connections are not at peak except for short periods. So even if there is no bandwidth to accept new VBR traffic, a reasonably good service will be offered to best-effort traffic. So the momentary service they will experience depends obviously on how many customers are trying to be serviced and what demands they place on the network.
Of course it is to the discretion of the system operator to adopt a policy of blocking CBR/VBR connections before their sum of PCR reaches the system capacity to allow better service to users of TCP/IP services.
The software managing the TEAL will now have to calculate in addition to the number of grants for CBR connections, the number of grants belonging to the fixed part of VBR connections and of course the polling grants which now are 2 (one PF and one PE). To be more systematic the s/w needs to keep for each ANT TEA the:

- aggregate of CBR traffic expressed in the required number of C grants in the list, which is obtained by the formula:

$$Ngr = \left\lceil \frac{PCR * L_{TEAL}}{C_{up}} \right\rceil$$

i.e. the next higher integer of SCR times the length of the list over the capacity.
Note that the rounding-off to the higher integer provides a redundancy which will be exploited for robustness purposes.
- aggregate of F grants belonging to VBR traffic. This should be equal to the minimum rate that the connection will ever experience since there would be waste if a higher rate than that goes to the TEAL. The calculation of the number will be based on the formula:

$$Ngr = \left\lceil \frac{MCR * L_{TEAL}}{C_{up}} \right\rceil$$

- the number of polling grants.

    - If there is no established connection (CBR or VBR, i.e. only UBR traffic may exist) then there should be one PF and one PE grants.
    - If only VBR connections have been established, besides the F grants, an additional PF grant will be written for robustness reasons for the ANT in question.
    - If there is a CBR connection (with or without VBR) no P grants are needed provided the rounding-off explained above is higher than 3 kbps, otherwise the next higher integer should be used.

The spacing of grants belonging to the same ANT will still take place. However the spacing for ANTs with both a CBR and VBR traffic should ideally result in good independent spacing of C and F grants. The spacing of P grants is less important, any position in the list relative to the other kinds of grants is acceptable.
The credit allocation list which will be used by the PAMs to enforce limits to the peak or guaranteed minimum and contain the number of credits per TEAL cycle must be created by the S/W and updated with every new connection set-up and release. The values will be stored in the RAM and reloaded by the hardware when every new TEAL reading cycle begins.
For VBR traffic the grants provided are either F grants in the list which are irrevocable, or D grants provided by the PAM which will cease to be given when the credits in a cycle are exhausted. The credits that will be communicated to the hardware will be only those corresponding to the D grants since the F grants correspond to much below the peak and they would never need to be held back even for a malicious user. Thus the credits will be calculated on the basis of the formula:

$$Ncr = \left\lceil \frac{(PCR - MCR) * L_{TEAL}}{C_{up}} \right\rceil$$

The granularity of the allocation is not very good but adequate for the job. The time available to the OBC to update the credit allocation list (and of course the TEAL) is the whole duration of one TEAL reading cycle (about 86 times the downstream Super Frame duration).

| Connection Table | | | | | | | | | | | | | | | | | | | |
|---|---|---|---|---|---|---|---|---|---|---|---|---|---|---|---|---|---|---|---|
| | | limconnid | | hw-addr | | | vpi/vci | | | | | grants | | | | | enkrypt key | | |
| | hrmco nnid | up | dwn | ana | li m | a nt | fv pi | fvc i | cvpi | cvci | te a | c | p f | p e | f | d | k e y u p | key low | s t a t u s |
| | | | | | | | | | | | | | | | | | | | |
| | | | | | | | | | | | | | | | | | | | |
| | | | | | | | | | | | | | | | | | | | |

| HFC Structure | | | | | | |
|---|---|---|---|---|---|---|
| hw-addr | slot | hw-addr | hw-addr | | | |
| ana | nbr | lim | ant_1 | ant_2 | ... | ant_N |
| | | | | | | |
| | | | | | | |
| | | | | | | |
| | | | | | | |
| | | | | | | |
| | | | | | | |
| | | | | | | |

| Address Mapping | |
|---|---|
| hardware address | IP address |
| | |
| | |
| | |
| | |

| Connection Configuration | | |
|---|---|---|
| ant_hwaddr | NSAP | vpi |
| | | |
| | | |
| | | |

List of abbreviations:

| | |
|---|---|
| AAL | ATM Adaptation Layer |
| ABR | Available Bit Rate |
| ACU | Access Control Unit |
| AF | Assured Forwarding |
| ANA | Access Network Adapter |
| ANT | Access Network Termination |
| ATM | Asynchronous Transfer Mode |
| BONT | Broadband Optical Network Termination |
| CAC | Call Acceptance Control |
| CDMA | Code Division Multiple Access |
| CBR | Constant Bitrate |
| CMC | Command Message Composer |
| CORBA | Common Object Request Broker Architecture |
| DSCP | Differentiated Services Code Point |
| DVB | Digital Video Broadcast |

| | |
|---|---|
| EF | Expedited Forwarding |
| FDMA | Frequency Division Multiple Access |
| FSM | Finite State Machine |
| FTDMA | Frequency and Time Division Multiple Access |
| GFR | Guaranteed Frame Rate |
| HFC | Hybrid Fibre Coax |
| HRM | HFC Resource Manager |
| IETF | Internet Engineering Task Force |
| IP | Internet Protocol |
| LIM | Line Interface Module |
| LAN | Local Area Network |
| MAC | Medium Access Control |
| MCR | Mean Cell Rate |
| MLIM | Master Line Interface Module |
| PAM | Permit Allocation Mechanism |
| PC | Personal Computer |
| PCR | Peak Cell Rate |
| PVC | Permanent Virtual Connection |
| QoS | Quality of Service |
| SCR | Sustainable Cell Rate |
| SDH | Synchronous Digital Hierarchy |
| SLA | Service Level Agreement |
| SNMP | Simple Network Management Protocol |
| SSCOP | Service Specific Connection Oriented Protocol |
| STM | Syncronous Transfer Mode |
| TAPA | Trillium Advanced Portability Architecture |
| TCP | Transmission Control Protocol |
| TEAL | Transmit Enable Address List |
| TDMA | Time Division Multile Access |
| UBR | Unspecified Bitrate |
| UCU | UNI Control Unit |
| UDP | User Datagram Protocol |
| UNI | User Network Interface |
| VBR | Variable Bitrate |
| rtVBR | Realtime VBR |
| nrtVBR | non Realtime VBR |
| VCI | Virtual Channel Identifier |
| VoD | Video on Demand |
| VPI | Virtual Path Identifier |

**Claims**

1. An access control unit to interface one ATM core network and at least one bidirectional access network, including: means to perform ATM signalling and resource management to provide dynamically adjustable ATM switched virtual connections (SVC) for subscribers connected to the access network.

2. An access control unit as claimed in claim 1 wherein the bidirectional access network is an HFC network.

3. An access control unit as claimed in claim 1 further comprising: a receiving unit to receive requests of subscribers for ATM connections with individual parameters.

4. An access control unit as claimed in claim 3 wherein each request includes an individual subscriber address or identification, a bandwidth request and a service category request.

5. An access control unit as claimed in claim 3 wherein the means perform the assignement of the requested resources automatically after authentication and out of the limited bandwidth of the ATM core network interface.

**6.** An access control unit as claimed in claim 5 wherein no bandwidth is assigned if the requested bandwidth is not available.

**7.** An access control unit as claimed in claim 1 wherein the means create a new Finite State Machine for each new ATM connection to store the connection status.

**8.** An access control unit as claimed in claim 1 wherein the means generate an encryption key and a decription key for each new ATM connection.

**9.** An access control unit as claimed in claim 1 wherein the means is able to change the reservation of bandwidth from time to time for each ATM connection and for each direction.

**10.** An access control unit as claimed in claim 9 wherein the change of the reservation is perfomed depending on the volume of data to be transmitted or the service requested.

**11.** An access control unit as claimed in claim 1 wherein the means are able to perform translations between ATM traffic parameters and MAC specific parameters.

**12.** An access control unit as claimed in claim 1 wherein the means include a central management instance with a predifined database containing all access network elements identified by their MAC address.

**13.** An access control unit as claimed in claim 1 wherein the means are adapted to perfom permanent virtual connections (PVC) in addition.

**14.** An access control unit to interface one ATM core network and at least one bidirectional access network, including: a processing unit programmed with a computer program to perform ATM signalling and resource management to provide dynamically adjustable ATM switched virtual connections (SVC) for subscribers connected to the access network, a database connected to the processing unit for intermediate storage, and defined interfaces connected to the processing unit.

**15.** Computer program comprising computer program code means adapted to perform ATM signalling and resource management to provide dynamically adjustable ATM switched virtual connections (SVC) when said program is run on a computer or a processing unit.

Fig. 1

Fig. 2

## IP Port 21

| IP dest | Port | PVC | DSCP |
|---|---|---|---|
| 129.69.X.X | 80 | 133 | 010 010 |
| X.X.X.X | 21 | 137 | 011 011 |
| DEFAULT | X | 130 | 000 000 |

## ATM VC 137

Fig. 3

| | |
|---|---|
| UDP-Drv | HRM |

UCU

Q.93B

Q.SAAL

ATM

HSM

⟶ Signaling Data    ⟶ Control Data

Fig. 4

**ANA**

| Coax 1 | Coax 2 | Coax 3 | Coax 4 |
|---|---|---|---|
| ANT 1 | ANT n | | |
| ANT 2 | | | |
| ANT 3 | | | |

Fig. 5

**Fig. 6**

NETWORK         UCU         USER

SETUP

Create UCU

Reserve HRM

SETUP

CONN

CONN

CONN ACK

CONN ACK

**Fig. 7**

| Connection index | | | | |
|---|---|---|---|---|
| ANA-ID | | | | |
| ANT-ID | | | | |
| Encryption key | | | | |
| QoS-class | | | | |
| Bandwidth | | | | |
| Type | | | | |

**Fig. 8**

| | C-grants | P-grants | F-grants | Credits |
|---|---|---|---|---|
| ANA | | | | |
| ANT 1 | | | | |
| ANT 2 | | | | |
| ANT 3 | | | | |
| ANT n | | | | |

**Fig. 9**

Fig. 10

Fig. 11

**Fig. 12**

**Fig. 13**

Fig. 14

Fig. 15

NETWORK    UCU    USER

■ **Q.93B Trillium**

AmUiAmtConInd()

Reserve HRM()

AmUiAmtConReq()

AmUiAmtConCfm()

AmUiAmtConResp()

AmUiAmtStInd()

AmUiAmtCnStReq()

Fig. 16

T_UDP  T_UCU  T_HRM T_HRM_vpitable T_HRM_topology T_HRM_cu

"antlogon"
from MLIM  antlogon

find
(VPI)

reg_ant

occupy

"antlogon_rep"
to MLIM  antlogon_rep

logon

Fig. 17

Fig. 18

Fig. 19

Fig. 20

T_UDP          T_UCU          T_HRM          T_HRM_cu

"addantconn_rep"
from ANT ⟶ | addantconn_rep

handle_addantconnrep

conn_cmplt

cmplt

reserve_ack

Fig. 21

T_UDP          T_UCU          T_HRM

free

"rellimconn"
to LIM ⟵ rellimconn

"relantconn"
to ANT ⟵ relantconn

Fig. 22

T_UDP          T_UCU          T_HRM          T_HRM_cu

"rellimconn_rep"
from LIM ⟶ | rellimconn_rep

handel_rellimconnrep

rel_cmplt

not cmplt

Fig. 23

Fig. 24

Fig. 25

Fig. 26

European Patent Office

**EUROPEAN SEARCH REPORT**

Application Number

EP 00 44 0288

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GOBL G ET AL: "ARIDEM - A MULTI-SERVICE BROADBAND ACCESS DEMONSTRATOR" ERICSSON REVIEW,SE,ERICSSON. STOCKHOLM, vol. 73, no. 3, 1996, pages 92-97, XP000629578 ISSN: 0014-0171 | 1-3,14, 15 | H04Q11/04 |
| A | * page 92, right-hand column, line 8 - page 94, right-hand column, last paragraph; figures 1-3 * | 4-13 | |
| A | OLSSON E M: "A SYSTEM FOR FLEXIBLE SERVICE-INDEPENDENT ACCESS NETWORK SOLUTIONS" ERICSSON REVIEW,ERICSSON. STOCKHOLM,SE, vol. 72, no. 3, 1995, pages 118-123, XP000543264 ISSN: 0014-0171 * figure 1 * | 1,14,15 | |
| A | US 6 111 882 A (YAMAMOTO KUNIO) 29 August 2000 (2000-08-29) * column 1, line 10 - column 2, line 41 * * column 4, line 13 - column 5, line 57 * * figures 1,4 * | 1,14,15 | TECHNICAL FIELDS SEARCHED (Int.Cl.7) H04Q |
| A | PANKEN F ET AL: "MAC PROTOCOL FOR ATM PONS SUPPORTING DIFFERENT SERVICE CATEGORIES" WASHINGTON, DC, JUNE 22 - 27, 1997,AMSTERDAM: ELSEVIER,NL, 22 June 1997 (1997-06-22), pages 825-834, XP000883210 ISBN: 0-444-82598-3 * the whole document * | 1-15 | |

-/--

The present search report has been drawn up for all claims

| Place of search | Date of completion of the search | Examiner |
|---|---|---|
| THE HAGUE | 16 March 2001 | Meurisse, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 00 44 0288

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 691 759 A (PLESSEY TELECOMM) 10 January 1996 (1996-01-10) * page 6, line 10 - line 25 * * page 8, line 56 - page 9, line 14 * * page 11, line 1 - line 19 * --- | 5,8 | |
| A | US 6 028 860 A (RAISSINIA ALIREZA ET AL) 22 February 2000 (2000-02-22) * column 2, line 52 - column 4, line 22 * * column 5, line 13 - column 6, line 19 * ----- | 1-15 | |
| | | | **TECHNICAL FIELDS SEARCHED** (Int.Cl.7) |

The present search report has been drawn up for all claims

| Place of search | Date of completion of the search | Examiner |
|---|---|---|
| THE HAGUE | 16 March 2001 | Meurisse, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**     EP 00 44 0288

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2001

| Patent document cited in search report | | Publication date | Patent family member(s) | | Publication date |
|---|---|---|---|---|---|
| US 6111882 | A | 29-08-2000 | JP | 10065693 A | 06-03-1998 |
| EP 0691759 | A | 10-01-1996 | EP | 0691759 A2 | 10-01-1996 |
| | | | EP | 0691760 A2 | 10-01-1996 |
| | | | EP | 0691763 A2 | 10-01-1996 |
| | | | GB | 2291311 A ,B | 17-01-1996 |
| | | | GB | 2291298 A ,B | 17-01-1996 |
| | | | GB | 2291299 A ,B | 17-01-1996 |
| | | | US | 6097736 A | 01-08-2000 |
| | | | US | 5793509 A | 11-08-1998 |
| | | | US | 5872645 A | 16-02-1999 |
| US 6028860 | A | 22-02-2000 | AU | 3647597 A | 15-05-1998 |
| | | | EP | 0934676 A1 | 11-08-1999 |
| | | | JP | 2001502509 T | 20-02-2001 |
| | | | WO | 9818289 A1 | 30-04-1998 |